# EUROPÄISCHE PATENTANMELDUNG

(11) **EP 3 961 313 A1**
(43) Veröffentlichungstag der Anmeldung: **02.03.2022**
(21) Anmeldenummer: 20193430.4
(22) Anmeldetag: 28.08.2020
(51) Int. Cl.: G05B 13/02, G06T 7/00, G05B 19/4065, B23Q 17/09

(54) **VERFAHREN ZUM TRAINIEREN EINES NEURONALEN NETZES ZUR ERKENNUNG EINES WERKZEUGZUSTANDS ANHAND VON BILDDATEN, VERFAHREN ZUR BEARBEITUNG UND/ODER FERTIGUNG SOWIE ANLAGE**

(71) Anmelder: Siemens Aktiengesellschaft, 80333 München (DE)
(72) Erfinder: Lutz, Benjamin Samuel, 81739 München (DE); Regulin, Daniel, 81825 München (DE)

(57) **Zusammenfassung**

Bei dem Verfahren zum Trainieren eines neuronalen Netzes zur Erkennung eines Werkzeugzustands anhand von Bilddaten wird das neuronale Netz zur Erkennung des Werkzeugzustands eines ersten Werkzeugtyps trainiert und es werden Bilddaten eines zweiten Werkzeugtyps herangezogen, welche einer Bildverarbeitung unterzogen werden, mittels welcher die Bilddaten des zweiten Werkzeugtyps in Bilddaten des ersten Werkzeugtyps gewandelt werden, wobei das neuronale Netz anhand der gewandelten Bilddaten trainiert wird.

Bei dem Verfahren zur Bearbeitung und/oder Fertigung mittels des ersten Werkzeugtyps wird der Werkzeugzustand des ersten Werkzeugtyps mittels eines neuronalen Netzes erkannt, das nach einem solchen Verfahren trainiert ist.

Die Anlage zur Bearbeitung und/oder Fertigung mittels eines ersten Werkzeugtyps umfasst ein neuronales Netz, welches nach einem solchen Verfahren zum Trainieren eines neuronalen Netzes trainiert ist und/oder welches zur Ausführung eines solchen Verfahrens zur Bearbeitung und/oder Fertigung ausgebildet ist.

## Beschreibung

Die Erfindung betrifft ein Verfahren zum Trainieren eines neuronalen Netzes zur Erkennung eines Werkzeugzustands anhand von Bilddaten, ein Verfahren zur Bearbeitung und/oder Fertigung sowie eine Anlage.

In der spanenden Fertigung kommt dem verwendeten Werkzeug und seinem Verschleiß eine hohe Relevanz zu: Zum einen ist der Verschleiß von Werkzeugen ein zentraler Kostenfaktor in der spanenden Fertigung, zum anderen lassen sich durch die Analyse von Verschleißerscheinungen des Werkzeuges wichtige Informationen über den Bearbeitungsprozess selbst gewinnen. So lassen sich aus den Verschleißerscheinungen des Werkzeugs Bearbeitungsparameter ableiten, um das Werkstück präziser oder mit weniger Werkzeugverschleiß zu bearbeiten. Dazu ist es nötig, den Verschleiß des Werkzeugs genau zu erfassen.

Für die Erfassung eines Grades des Verschleißes des Werkzeugs sind optische Verfahren bekannt, welche zwischen verschiedenen Verschleißkategorien, insbesondere zwischen einem Freiflächenverschleiß oder einer Aufbauschneide oder einer Kerbbildung, differenzieren können. Zum anderen kann bekanntermaßen nicht nur das Vorhandensein eines verschleißbedingten Defektes von Werkzeugen festgestellt werden, sondern es lassen sich zusätzlich weitergehende Informationen, wie etwa eine Breite und eine Form und eine Fläche, des jeweiligen Defektes bestimmen.

Es ist zudem bekannt, Verfahren der künstlichen Intelligenz zur Erkennung von Verschleißkategorien einzusetzen.

Allerdings ist es bei Verfahren der künstlichen Intelligenz erforderlich, ein neuronales Netz zur Erkennung von Defekten eigens zu trainieren.

Solche Verfahren lassen sich daher bei neuen Werkzeugtypen bislang nicht einsetzen, da hierzu in der Regel gar keine Trainingsdaten vorliegen und somit ein Einlernen auf neue Werkzeugtypen einen hohen manuellen Aufwand sowie eine hohe Einstiegshürde für einen Einsatz neuer Werkzeugtypen bedeutet.

Für die industrielle Anwendung ist dieser Umstand besonders relevant, da hier eine besonders große Vielfalt an Werkzeugtypen für die spanenden Bearbeitung besteht. Werkzeuge, insbesondere Schneidwerkzeuge, unterscheiden sich sowohl in ihrer Geometrie als auch in verwendeten Beschichtungen. Gerade hier ist stets eine Anpassung von neuronalen Netzen erforderlich und infolge des Einlernens von neuronalen Netzen regelmäßig aufwendig und teuer.

Vor diesem Hintergrund des Standes der Technik ist es daher Aufgabe der Erfindung, ein verbessertes Verfahren zum Trainieren eines neuronalen Netzes zur Erkennung eines Werkzeugzustands bereitzustellen. Zudem ist es Aufgabe der Erfindung, ein verbessertes Verfahren und eine verbesserte Anlage zur Bearbeitung und/oder Fertigung eines Werkstücks anzugeben.

Diese Aufgabe der Erfindung wird mit einem Verfahren zum Trainieren eines neuronalen Netzes zur Erkennung eines Werkzeugzustands anhand von Bilddaten mit den in Anspruch 1 angegebenen Merkmalen und mit einem Verfahren zur Bearbeitung und/oder Fertigung mit den in Anspruch 9 angegebenen Merkmalen sowie mit einer Anlage mit den in Anspruch 10 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäße Verfahren zum Trainieren eines neuronalen Netzes zur Erkennung eines Werkzeugzustands anhand von Bilddaten wird das neuronale Netz zur Erkennung des Werkzeugzustands eines ersten Werkzeugtyps trainiert und es werden Bilddaten eines zweiten Werkzeugtyps herangezogen, welche einer Bildverarbeitung unterzogen werden, mittels welcher die Bilddaten des zweiten Werkzeugtyps in Bilddaten des ersten Werkzeugtyps gewandelt werden. Bei dem erfindungsgemäßen Verfahren wird das neuronale Netz anhand der gewandelten Bilddaten trainiert.

Vorteilhaft können mittels des erfindungsgemäßen Verfahrens Bilddaten des zweiten Werkzeugtyps herangezogen werden und in Bilddaten des ersten Werkzeugtyps gewandelt werden. Auf diese Weise können also auf den ersten Werkzeugtyp abgestimmte Bilddaten errechnet werden. Eine manuelle Gewinnung von Bilddaten des ersten Werkzeugtyps ist somit verzichtbar. Der sonst erforderliche Aufwand zur Generierung von Bilddaten des ersten Werkzeugtyps reduziert sich erfindungsgemäß also auf eine bloße Wandlung der Bilddaten des zweiten Werkzeugtyps in Bilddaten des ersten Werkzeugtyps. Anhand der gewandelten Bilddaten lässt sich damit das neuronale Netz in gleicher Weise trainieren wie mit real erfassten Bilddaten des ersten Werkzeugtyps.

Insbesondere müssten bei bekannten Lösungen real erfasste Bilddaten des ersten Werkzeugtyps von Fachexperten zunächst klassifiziert werden, um den real erfassten Bilddaten einen Werkzeugzustand, wie insbesondere einen Werkzeugverschleiß, zuordnen zu können. Daher müssen bei den real erfassten Bilddaten manuelle Beurteilungen erfolgen. Bei dem erfindungsgemäßen Verfahren entfallen diese gesonderten Beurteilungen. Stattdessen erfolgt die Wandlung der Bilddaten des zweiten Werkzeugtyps in jene des ersten Werkzeugtyps bevorzugt automatisiert, etwa mittels einer Bildverarbeitungssoftware.

Es versteht sich, dass sich der erste und der zweite Werkzeugtyp im Sinne dieser Erfindung zweckmäßig voneinander unterscheiden.

Bevorzugt werden bei dem erfindungsgemäßen Verfahren die Bilddaten derart gewandelt, dass die Form des zweiten Werkzeugtyps in eine Form des ersten Werkzeugtyps überführt wird.

So unterscheiden sich Werkzeugtypen häufig gerade in der Form, etwa im Falle von Werkzeugen zur subtraktiven Bearbeitung. Insbesondere Schneiden und/oder Fräser und/oder Bohrer unterscheiden sich regelmäßig in der Form.

Vorteilhaft wird bei dem Verfahren gemäß der Erfindung die Form des zweiten Werkzeugtyps in den Bilddaten derart in eine Form des ersten Werkzeugtyps überführt, dass die Bilddaten des zweiten Werkzeugtyps in kleine Bildbereiche aufgeteilt werden, welche in ihrer relativen Orientierung und/oder Position und/oder Größe innerhalb der Bilddaten des zweiten Werkzeugtyps geändert werden, sodass die geänderten Bilddaten die Form des ersten Werkzeugtyps widergeben.

Alternativ oder zusätzlich und ebenfalls bevorzugt werden bei dem Verfahren die Bilddaten derart gewandelt, dass die Farbe des zweiten Werkzeugtyps in eine Farbe des ersten Werkzeugtyps überführt wird.

Typischerweise unterscheiden sich Werkzeugtypen häufig in ihrem Werkzeugmaterial und/oder ihrer Beschichtung, insbesondere an einem der Bearbeitung dienenden Bereich des Werkzeugtyps. Diese unterschiedliche Beschichtung und/oder das unterschiedliche Material des zweiten und ersten Werkzeugtyps können mittels einer Anpassung der Farbe des Werkzeugtyps realistisch simuliert werden. Mittels einer Anpassung der Farbe des zweiten Werkzeugtyps können daher effizient Bilddaten des zweiten Werkzeugtyps in jene des ersten Werkzeugtyps gewandelt werden.

Vorteilhaft ist oder sind bei dem Verfahren gemäß der Erfindung erster Werkzeugtyp und/oder zweiter Werkzeugtyp zur subtraktiven Bearbeitung eines Werkstücks ausgebildet.

Gerade bei Werkzeugtypen, welche zur subtraktiven Bearbeitung ausgebildet sind, ist ein Werkzeugzustand eine besonders kostenrelevante Größe. So wirken sich sowohl ein rechtzeitiger Austausch von Werkzeugen als auch eine möglichst lange Nutzungsdauer deutlich auf die Bearbeitungskosten des Werkstücks aus. Eine genaue Beurteilung des Werkzeugzustands des eingesetzten Werkzeugtyps ist daher von großer Bedeutung für die Wirtschaftlichkeit bei der Bearbeitung und/oder Fertigung.

Bei dem erfindungsgemäßen Verfahren bilden erster und/oder zweiter Werkzeugtyp vorzugsweise ein Schneid- und/oder Fräswerkzeug und/oder ein Bohrwerkzeug. Zweckmäßig ist/sind oder umfasst/umfassen der erste Werkzeugtyp und/oder der zweite Werkzeugtyp eine Schneide und/oder einen Fräser und/oder einen Bohrer.

Bei dem erfindungsgemäßen Verfahren entstammen die Bilddaten vorzugsweise optischer Bildgebung. Geeigneterweise werden bei dem erfindungsgemäßen Verfahren die Bilddaten mit einer Kamera, insbesondere einer Mikroskopkamera, gewonnen. Zweckmäßig werden die Bilddaten digital erhalten, sodass die Bilddaten digital, vorzugsweise mittels einer Software, gewandelt werden können.

Bei dem erfindungsgemäßen Verfahren ist der Werkzeugzustand bevorzugt ein Verschleißzustand. Gerade Verschleißzustände von Werkzeugen haben bei der subtraktiven Bearbeitung einen hohen Einfluss auf die Kosten der Bearbeitung des Werkstücks. Etwa ein zu früher Austausch von Werkzeugen bei der Bearbeitung bedingt hohe Werkzeugkosten. Ein zu später Austausch von Werkzeugen hingegen kann die Bearbeitung von Werkstücken erschweren und einen Bearbeitungsausschuss und dadurch bedingte Kosten erhöhen. Folglich erhöht der Einsatz des erfindungsgemäßen Verfahrens zur Beurteilung von Verschleißzuständen die Kosteneffizienz bei der Bearbeitung und/oder Fertigung.

Bei dem Verfahren gemäß der Erfindung werden die Bilddaten vorzugsweise gewandelt, indem Farbkanäle geändert werden und/oder Bilddaten gestaucht und/oder gestreckt werden und/oder Bilddaten geteilt und geändert, insbesondere in der Position und/oder der Größe und/oder der Orientierung geändert, zusammengesetzt werden.

Das erfindungsgemäß Verfahren zur Bearbeitung und/oder Fertigung wird mittels des ersten Werkzeugtyps durchgeführt, wobei der Werkzeugzustand des ersten Werkzeugtyps mittels eines neuronalen Netzes erkannt wird, welches nach einem Verfahren wie vorhergehend beschrieben trainiert ist.

Besonders bevorzugt wird das erfindungsgemäße Verfahren zur Bearbeitung und/oder Fertigung mittels des ersten Werkzeugtyps durchgeführt, wobei das Trainieren des neuronalen Netzes mittels des erfindungsgemäßen Verfahrens durchgeführt wird. D.h. idealerweise bildet das Trainieren des neuronalen Netzes einen Teil des erfindungsgemäßen Verfahrens zur Bearbeitung und/oder Fertigung.

Zweckmäßig wird die Bearbeitung und/oder Fertigung abhängig vom Werkzeugzustand angepasst und/oder unterbrochen.

Die erfindungsgemäße Anlage zur Bearbeitung und/oder Fertigung mittels eines ersten Werkzeugtyps umfasst ein neuronales Netz, welches nach einem erfindungsgemäßen Verfahren zum Trainieren eines neuronalen Netzes wie vorhergehend beschrieben erläutert trainiert ist, und/oder die Anlage ist zur Ausführung eines erfindungsgemäßen Verfahrens zur Bearbeitung und/oder Fertigung wie vorhergehend beschrieben ausgebildet. Zweckmäßig weist die Anlage ein Bearbeitungsmittel mit dem ersten Werkzeugtyp auf, welches zweckmäßig abhängig vom Verschleißzustand gesteuert wird und/oder aber die Anlage ist ausgebildet, eine Fertigung und/oder Bearbeitung mit dem Bearbeitungsmittel zu unterbrechen, damit der erste Werkzeugtyp gewechselt werden kann. Zweckmäßig weist die Anlage Trainingsmittel zum Trainieren des neuronalen Netzes mittels des erfindungsgemäßen Verfahrens wie vorhergehend beschrieben auf. Vorzugsweise umfasst die Anlage eine Bildverarbeitungseinrichtung und/oder Bildverarbeitungssoftware, welche zum Wandeln der Bilddaten des zweiten Werkzeugtyps in Bilddaten des ersten Werkzeugtyps eingerichtet und ausgebildet sind.

Zweckmäßig umfasst die erfindungsgemäße Anlage eine Bilderfassungseinheit zur Erfassung eines Bildes des ersten Werkzeugtyps sowie eine Auswerteinheit mit dem neuronalen Netz, welche zur Erkennung eines Verschleißgrades des ersten Werkzeugtyps ausgebildet und eingerichtet ist. Geeigneterweise ist die Bilderfassungseinheit eine Kamera, vorzugsweise eine Mikroskopkamera.

Nachfolgend wird die Erfindung anhand in der Zeichnung dargestellter Ausführungsbeispiele näher erläutert. Es zeigen:
- Fig. 1: eine Anlage zur Durchführung des erfindungsgemäßen Verfahrens zur Bearbeitung eines Werkstücks schematisch in einer Prinzipskizze,
- Fig. 2: ein Ablaufdiagramm eines Ausführungsbeispiels eines erfindungsgemäßen Verfahrens zur Bearbeitung eines Werkstücks mittels der Anlage gem. Fig. 1 schematisch in einem Flussdiagramm und
- Fig. 3: eine Transformation von Bilddaten eines zweiten Schneidentyps in Bilddaten eines ersten Schneidentyps bei der Ausführung des Verfahrens gem. Fig. 2 schematisch in einer Prinzipskizze.

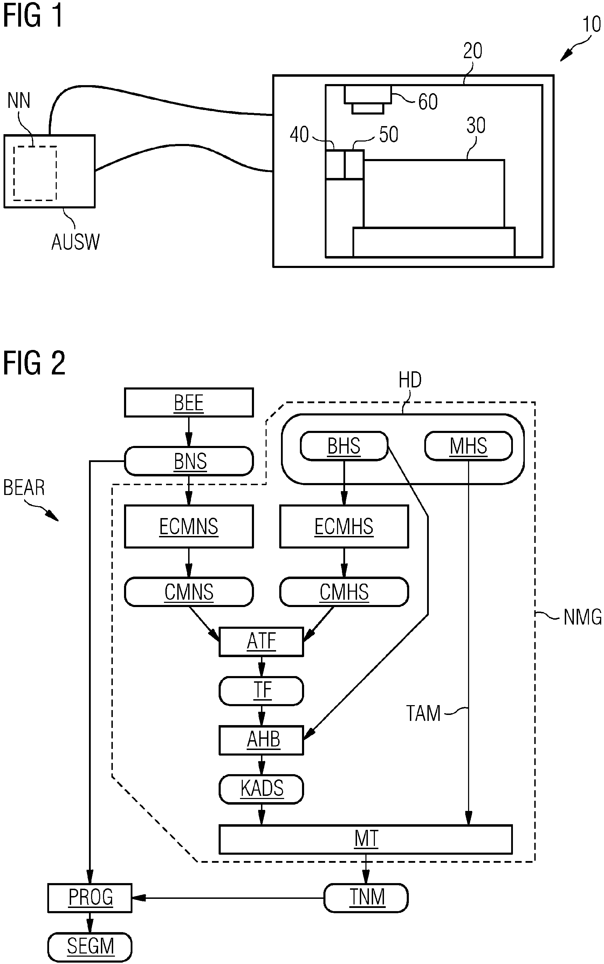

Die in Fig. 1 dargestellte erfindungsgemäße Anlage 10 weist eine Prozesskammer 20 auf, in welcher ein Werkstück 30 nach einem erfindungsgemäßen Verfahren BEAR zur Bearbeitung eines Werkstücks 30 bearbeitet wird. Das Werkstück 30 wird bearbeitet, indem es mittels eines Fräswerkzeugs 40 gefräst wird. Das Fräswerkzeug 40 weist eine Schneide 50 auf, welche beim Fräsen des Werkstücks 30 verschleißt.

In der Prozesskammer 20 der Anlage 10 ist zudem eine Kamera 60 angeordnet, welche zwischen Phasen der Bearbeitung ein Bild BNS der Schneide 50 des Fräswerkzeugs 40 aufnimmt und anhand einer Auswerteinrichtung AUSW auswertet. Die Kamera 60 ist im dargestellten Ausführungsbeispiel eine Mikroskopkamera, die in einem Bilderfassungsschritt BEE ein hochauflösendes Bild BNS der Schneide 50 erfasst. Dabei erfasst die Kamera 60 vor allem denjenigen Bereich der Schneide 50, welche typischerweise einem Verschleiß unterliegt. Im gezeigten Ausführungsbeispiel handelt es sich dabei um eine Hauptfreifläche und eine Spanfläche der Schneide 50.

Die Auswerteinrichtung AUSW bestimmt anhand der Bilder BNS der Schneide 50 zum einen, ob die Schneide 50 weiterverwendet werden kann oder ggf. ausgetauscht werden muss. Die Auswerteinrichtung AUSW bestimmt anhand der Bilder BNS zudem, ob und welche Anpassung von Bearbeitungsparametern der Anlage 20 erforderlich sind, wenn mit der Schneide 50 das Werkstück 30 weiter bearbeitet wird.

Die Auswerteinrichtung AUSW umfasst zur Auswertung der Bilder BNS der Schneide 50 ein neuronales Netz NN, welches in einem ersten Schritt anhand des erfindungsgemäßen Verfahrens NMG zum Trainieren eines neuronalen Netzes zur Erkennung eines Werkzeugzustands anhand von Bilddaten trainiert wird.

Das Trainieren des neuronalen Netzes NN erfolgt erfindungsgemäß wie in Fig. 2 gezeigt. Bei dem in Fig. 2 gezeigten Verfahren gehört die Schneide 50 einem ersten Schneidentyp an, welcher bislang noch nie zum Trainieren des neuronalen Netzes NN der Auswerteinrichtung AUSW herangezogen worden ist. Allerdings liegen Bilder BHS historischer Schneiden, d.h. Bilder BHS eines zweiten Schneidentyps, vor, welche bereits mithilfe von Prozessexperten in verschiedene Verschleißgrade MHS klassifiziert worden sind.

Für das automatische Einlernen des neuronalen Netzes NN auf den ersten Scheidentyp müssen mehrere Bilder BNS verschiedener Schneiden 50 des ersten Schneidentyps bei verschiedenen Verschleißzuständen erfasst werden. Solche Verschleißzustände können beispielsweise Kategorien wie "neuer Zustand", "in Bearbeitung befindlicher Zustand" sowie "verschlissener Zustand" zugeordnet werden. Im dargestellten Ausführungsbeispiel decken die Bilder BNS alle in Betracht kommenden Kategorien ab. Die Bilder BNS der neuen Schneide 50 werden zum Training des neuronalen Netzes NN zwischengespeichert.

Anstatt allerdings tatsächliche Bilder BNS von Schneiden 50 des ersten Schneidentyps für verschiedene Verschließzustände aufzunehmen, werden bei dem erfindungsgemäßen Verfahren manipulierte Bilddaten BNS zum Trainieren des neuronalen Netzes NN verwendet:
Hierzu werden historische Daten HD zu Schneiden des zweiten Schneidentyps herangezogen, welche in der Vergangenheit bereits erfasst worden sind und welche in einem Speicher der Auswerteinrichtung AUSW bereitgehalten werden. Diese historischen Daten HD bestehen jeweils aus einem Tupel eines historischen Bildes BHS der Schneide des zweiten Schneidentyps sowie einer zugehörigen Kategorie MHS des Verschleißzustandes, welche den oben beschriebenen Kategorien des Verschleißzustandes entsprechen. Diese Kategorien MHS des Verschleißzustands sind von Prozessexperten anhand des Bildes BHS der Schneiden des zweiten Schneidentyps erkannte Kategorien MHS.

In der Auswerteinrichtung AUSW werden nun zunächst in einem ersten Charakterisierungsschritt ECMNS charakteristische Merkmale CMNS von Schneiden 50 des ersten Schneidentyps erfasst, beispielsweise mittels einer Auswertung der Bilder BNS durch eine Software, z.B. eine mittels der Programmiersprache Python realisierte Software. Diese Software analysiert den Satz von Bildern BNS der Schneide 50 des ersten Schneidentyps und berechnet die charakteristische Merkmale CMNS, im dargestellten Ausführungsbeispiel eine Form und eine Farbe, der Schneide 50. Diese charakteristischen Merkmale CMNS der Schneiden 50 des ersten Werkzeugtyps zeichnen sich dadurch aus, dass sie in sämtlichen Bildern BNS von Schneiden 50 desselben ersten Schneidentyps nahezu unverändert auftreten.

In einem zweiten Charakterisierungsschritt ECMHS werden mittels der Auswerteinrichtung AUSW charakteristische Merkmale CMHS von Schneiden des zweiten Schneidentyps erfasst. Die charakteristischen Merkmale CMHS werden mittels einer Auswertung der im Speicher der Auswerteinrichtung AUSW gehaltenen Bilder BHS des zweiten Schneidentyps durch eine Software bestimmt. Auch hier bilden Form und Farbe der Schneiden des zweiten Schneidentyps charakteristische Merkmale CMHS des zweiten Schneidentyps. Die charakteristischen Merkmale CMHS des zweiten Schneidentyps treten in sämtlichen Bildern BHS der Schneiden des zweiten Schneidentyps nahezu identisch auf. Die charakteristischen Merkmale CMHS des zweiten Schneidentyps sowie die charakteristischen Merkmale CMNS des ersten Schneidentyps unterscheiden sich hingegen deutlich voneinander. Mithin sind die jeweiligen charakteristischen Merkmale CMNS, CMHS jeweils für den ersten und den zweiten Schneidentyp charakteristisch und trennscharf.

Basierend auf den charakterlichen Merkmalen CMNS des ersten Schneidentyps und den charakterlichen Merkmalen CMHS des zweiten Schneidentyps wird nun mittels eines Softwaremoduls ATF zur Ableitung einer Transferfunktion eine Transferfunktion TF abgeleitet, welche Bilder BHS des zweiten Schneidentyps in Bilder BNS des ersten Schneidentyps transformiert. Mittels der Transferfunktion können folglich Bilder BHS von Schneiden des zweiten Schneidentyps herangezogen werden, um das neuronale Netz NN der Auswerteinheit AUSW zur Auswertung von Bildern BNS des ersten Schneidentyps zu trainieren.

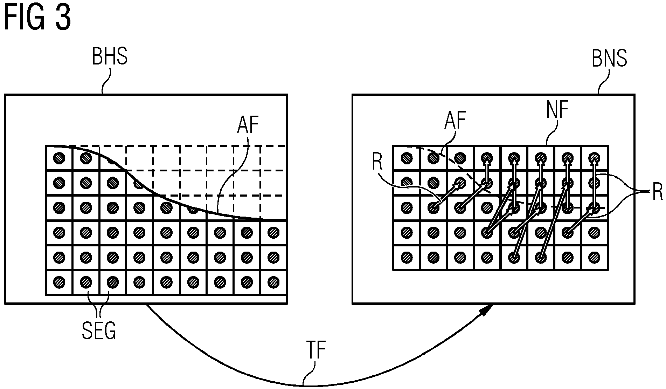

Die Funktionsweise der Transferfunktion TF ist in Fig. 3 detaillierter dargestellt:
Mittels der Transferfunktion TF werden die Bilder BHS von Schneiden des zweiten Schneidentyps in Bilder BNS von Schneiden 50 des ersten Schneidentyps transformiert.

Die Transferfunktion TF transformiert zum einen die Farbe der Schneiden des zweiten Schneidentyps, sodass die resultierenden Bilder BNS an die Schneiden 50 des ersten Schneidentyps farblich angepasst sind.

Ferner kann mittels der Transferfunktion TF die Form der Schneiden des zweiten Schneidentyps in eine Form des ersten Schneidentyps transformiert werden: Dazu werden die Bilder BHS des zweiten Schneidentyps in kleine Segmente SEG aufgeteilt, welche derart geeignet entlang der Richtungen R verschoben werden, dass die modifizierten Bilder in Bildern BNS der Form NF des ersten Schneidentyps resultieren. Alternativ oder zusätzlich kann eine Stauchung und/oder Streckung der Bildinformation erfolgen, sodass die Form AF der Schneiden des zweiten Schneidentyps in die Form NF der Schneiden 50 des ersten Schneidentyps hinein transformiert wird. Die Farbe der Segmente SEG ist entweder mittels eines farbigen Punktes oder mittels eines schraffierten Punktes in der Zeichnung symbolisiert.

Mittels der derart ermittelten Transferfunktion TF können nun alle Bilder der Schneiden des zweiten Schneidentyps in Bilder des ersten Schneidentyps umgewandelt werden, indem die Transferfunktion TF in einem weiteren Verfahrensschritt AHB auf sämtliche Bilder BHS der Schneiden des zweiten Werkzeugtyps angewendet wird. Auf diese Weise wird ein neuer Datensatz KADS von Bildern BNS von Schneiden des ersten Schneidentyps generiert. Diesen neu generierten Bildern BNS des Datensatzes KADS werden nun die Kategorien MHS ihres jeweiligen Verschließzustandes zugeordnet. Die jeweilige Kategorie MHS des Verschleißzustandes entspricht im dargestellten Ausführungsbeispiel der jeweiligen Kategorie des Verschleißzustandes der Schneiden des zweiten Schneidentyps. Die Kategorien werden folglich einfach auf die neu generierten Bilder BNS der Schneiden 50 des ersten Schneidentyps übertragen und auf diese Weise einfach bildweise zugeordnet. Die jeweilige Kategorie MHS des Verschleißzustands wird dem neuronalen Netz mittels einer Datenübermittlung TAM übermittelt, sodass das neuronale Netz NN sowohl die Kategorien MHS der Verschleißzustände als auch die jeweiligen neu generierten Bilder BNS der Schneiden des ersten Schneidentyps erhält.

Mit diesem Datensatz KADS von neuen Bildern BNS von Schneiden 50 des ersten Schneidentyps und den jeweils den Bildern zugeordneten Verschleißkategorien MHS wird das neuronale Netz in einem Trainingsschritt MT trainiert. Nachdem das neuronale Netz NN trainiert ist und somit ein trainiertes Modell TNM darstellt, wird dieses gespeichert und von der Auswerteinheit AUSW operativ bei der Bearbeitung des Werkstücks 30 genutzt. Mittels des trainierten neuronalen Netzes NN kann ein Verschleißzustand der Schneide 50 zuverlässig in einem Einschätzungsvorgang PROG bestimmt werden und ein Zeitpunkt eines Wechsels der Schneide 50 ermittelt werden. Zudem können abhängig vom Verschleißzustand der Schneide 50 Bearbeitungsparameter der Anlage 10 zur Bearbeitung des Werkstücks 30 in einem Anpassungsschritt SEGM angepasst werden, um einen fortschreitenden Verschleiß der Schneide 50 zu kompensieren.

## Patentansprüche

1. Verfahren zum Trainieren eines neuronalen Netzes (NN) zur Erkennung eines Werkzeugzustands(MHS) anhand von Bilddaten (BNS), bei welchem das neuronale Netz (NN) zur Erkennung des Werkzeugzustands (MHS) eines ersten Werkzeugtyps (50) trainiert wird und bei welchem Bilddaten (BHS) eines zweiten Werkzeugtyps herangezogen werden, welche einer Bildverarbeitung (TF) unterzogen werden, mittels welcher die Bilddaten (BHS) des zweiten Werkzeugtyps in Bilddaten (BNS) des ersten Werkzeugtyps (50) gewandelt werden, wobei das neuronale Netz (NN) anhand der gewandelten Bilddaten (BNS) trainiert wird.

2. Verfahren nach dem vorhergehenden Anspruch, bei welchem die Bilddaten (BHS) derart gewandelt werden, dass die Form (AF) des zweiten Werkzeugtyps in eine Form (NF) des ersten Werkzeugtyps (50) überführt wird.

3. Verfahren nach einem der vorhergehenden Ansprüche, bei welchem die Bilddaten (BHS) derart gewandelt werden, dass die Farbe des zweiten Werkzeugtyps in eine Farbe des ersten Werkzeugtyps (50) überführt wird.

4. Verfahren nach einem der vorhergehenden Ansprüche, bei welchem erster Werkzeugtyp (50) und/oder zweiter Werkzeugtyp zur subtraktiven Bearbeitung eines Werkstücks (30) ausgebildet ist/sind und vorzugsweise ein Schneid- und/oder Fräswerkzeug bildet/bilden.

5. Verfahren nach einem der vorhergehenden Ansprüche, bei welchem die Bilddaten optischer Bildgebung (BEE), insbesondere mittels einer Kamera (60), vorzugsweise einer Mikroskopkamera, entstammen.

6. Verfahren nach einem der vorhergehenden Ansprüche, bei welchem den Bilddaten BNS jeweils ein Werkzeugzustand (MHS) zugeordnet ist, welcher jeweils gemeinsam mit den Bilddaten (BNS) zum Trainieren des neuronalen Netzes (NN) herangezogen wird.

7. Verfahren nach einem der vorhergehenden Ansprüche, bei welchem der Werkzeugzustand (MHS) ein Verschleißzustand ist.

8. Verfahren nach einem der vorhergehenden Ansprüche, bei welchem die Bilddaten (BHS) gewandelt werden, indem Farbkanäle geändert werden und/oder Bilddaten (BHS) gestaucht und/oder gestreckt werden und/oder Bilddaten (BHS) geteilt und geändert, insbesondere geändert positioniert und/oder orientiert und/oder gestaucht und/oder gestreckt, zusammengesetzt werden.

9. Verfahren zur Bearbeitung und/oder Fertigung, welches mittels des ersten Werkzeugtyps (50) durchgeführt wird, wobei der Werkzeugzustand (MHS) des ersten Werkzeugtyps (50) mittels eines neuronalen Netzes (NN) erkannt wird, welches nach einem Verfahren (NMG) nach einem der vorhergehenden Ansprüche trainiert ist.

10. Anlage zur Bearbeitung und/oder Fertigung mittels eines ersten Werkzeugtyps (50), umfassend ein neuronales Netz (NN), welches nach einem Verfahren der Ansprüche 1 bis 7 trainiert (NMG) ist und/oder welches zur Ausführung eines Verfahrens nach dem vorhergehenden Anspruch ausgebildet ist.
